(19) Europäisches Patentamt

**European Patent Office**

**Office européen des brevets**

(11) Veröffentlichungsnummer: **0 243 339 B1**

(12) **EUROPÄISCHE PATENTSCHRIFT**

(45) Veröffentlichungstag der Patentschrift: **03.06.92**

(21) Anmeldenummer: **87890041.4**

(22) Anmeldetag: **04.03.87**

(51) Int. Cl.⁵: **F02M 59/10**, F16H 53/02

(54) **Nockenwelle.**

(30) Priorität: **21.04.86 AT 1053/86**

(43) Veröffentlichungstag der Anmeldung:
**28.10.87 Patentblatt 87/44**

(45) Bekanntmachung des Hinweises auf die
Patenterteilung:
**03.06.92 Patentblatt 92/23**

(84) Benannte Vertragsstaaten:
**AT DE GB**

(56) Entgegenhaltungen:
**DE-A- 3 236 800**
**GB-A- 299 001**
**US-A- 1 849 490**
**US-A- 3 259 077**

(73) Patentinhaber: **ROBERT BOSCH AG**
**Friedmann-Maier-Strasse 7**
**A-5400 Hallein(AT)**

(72) Erfinder: **Stipek, Theodor, Dr. Dipl.-Ing.**
**Altengutrathstrasse 3**
**A-5400 Hallein(AT)**

(74) Vertreter: **Krause, Walter, Dr. Dipl.-Ing.**
**Postfach 200 Singerstrasse 8**
**A-1010 Wien(AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung bezieht sich auf eine Nockenwelle mit mindestens einer Nocke, zur Steuerung eines mit einer Rolle versehenen Stößels, einem von einem Nockengrundkreis ausgehenden, den Stößel in seine höchste Lage hebenden ersten Nockenabschnitt, dessen kleinster Abstand von der Achse der Nockenwelle kleiner ist als der Radius des Nockengrundkreises, und einem in Uhrzeigerrichtung unmittelbar nach diesem ersten Nockenabschnitt angeordneten und am Nockengrundkreis endenden, den Stößel absenkenden zweiten Nockenabschnitt, wobei die Kontur der Nocke im ersten Nockenabschnitt aus einem in Uhrzeigerrichtung an den zweiten Nockenabschnitt anschließenden Übergangsbereich besteht, der gegenüber dem Radius des Nockengrundkreises einen kleineren Radius aufweist, und an diesen Übergangsbereich ein Bereich anschließt, mit einer Kontur, die einen zum Nockengrundkreis konzentrischen Kreis, dessen Radius kleiner ist als der Radius des Nockengrundkreises, berührt, wobei der Nockengrundkreis radius geringfügig größer oder gleich groß ist wie der Radius der Nochenwelle.

Derartige Nockenwellen werden häufig für den Antrieb von Pumpenkolben von Kraftstoff-Einspritzpumpen für Brennkraftmaschinen, wie z.B. Dieselmotoren, verwendet.

Die geometrische Form eines Nockens für den Rollenstößelantrieb einer Einspritzpumpe wird entweder aus verschiedenen geometrischen Linienzügen mit einfachem Bildungsgesetz aufgebaut oder es wird aus einem angenommenen Verlauf von Erhebung und damit auch Geschwindigkeit und Beschleunigung, der die als geometrischen Randbedingungen berücksichtigt, die geometrische Form des Nockens ermittelt und in weiterer Folge den Herstelldaten des Nockens zugrundegelegt. Der Einspritznocken weist als wesentliche Kenndaten die Radien von Grundkreis und Kopfkreis und eine bestimmte Tragbreite auf. Dazu kommt noch als wesentliche Einflußgröße der Radius der Stößelrolle. Bei bekannten Nockenwellen stellt die Differenz zwischen Grundkreis-und Kopfkreisradius den Nockenhub dar, welcher ein Maß für die mögliche Fördermenge der Einspritzpumpe ist. Der Grundkreisradius des Nockens ist meist etwas größer oder gleich groß wie der Radius der Abschnitte der Nockenwelle zwischen zwei Nocken. Der Grundkreisdurchmesser ist maßgeblich für die Torsions- und Biegesteifigkeit der Nockenwelle, welche bei den hohen auftretenden Pumpenraumdrücken von großer Bedeutung für die exakte Verwirklichung des gewünschten Kraftstoff-Förderverlaufes sind.

Es sind Nockenwellen bekannt, bei welchen als erster in Drehrichtung der Nockenwelle vorne liegender Bereich der Nokkenkuntur, der unmittelbar an den Grundkreis anschließt, ein Kreisbogen mit gegenüber dem Radius des Nockengrundkreises großem positivem Radius, eine Tangente oder ein Kreisbogen mit großem negativem Radius vorgesehen, dessen Mittelpunkt außerhalb der vom Nockengrundkreis umschlossenen Querschnittsfläche liegt. Dabei können auch Bereiche mit veränderlichem Krümmungsradius verwirklicht werden, wenn z.B. die Erhebung einem bestimmten Bildungsgesetz gehorchen soll.

Durch diesen ersten Nockenabschnitt wird ein rascher Anstieg der Geschwindigkeit erreicht. Der Richtungswinkel der Rollenmittelpunktsbahn zur Normalen auf die Verbindungslinie Nockenzentrum/Rollenzentrum ist dabei stets positiv, d.h. die Geschwindigkeit des Rollenstößels und Pumpenkolbens ist ebenfalls positiv. Es besteht sogar ein gewisses Vorurteil der Fachwelt gegen eine andere Ausbildung. So wird in der AT-PS 219 350 festgestellt, daß ein anderer Verlauf sinnlos wäre.

Bei der Konstruktion von Dieseleinspritzpumpen zeigt es sich, daß einerseits ein möglichst großer Hub erforderlich ist, um große Fördermengen und -geschwindigkeiten zu erzielen, andererseits ein großer Nockengrundkreis zweckmäßig ist, um einen möglichst biege- und verwindungssteifen Antriebsstrang verwirklichen zu können. Ein großer Grundkreisradius der Nockenwelle bewirkt aber auch einen großen Kopfkreisradius und damit große Pumpenabmessungen.

Aus der DE-A- 3 236 800 ist die eingangs genannte Nockenwelle bekanntgeworden, bei welcher eine Vergrößerung des Nockenhubes dadurch erreicht wird, daß der kleinste Abstand der Nockenbahn von der Nockenwellenachse kleiner als der Nockenwellenhalbmesser ist, und, ausgehend vom größten Abstand der Nockenbahn von der Nockenwellenachse, ihr Abstand auf einem Drehwinkel von mehr als 180° größer als der Nockenwellenhalbmesser ist. Damit wird aber bei dieser bekannten Nockenwelle eine Schwächung über einen größeren Winkelbereich, z.B. über etwa 90°, stattfinden, die eine höhere Verdrehbeanspruchung und vor allem auch eine stärkere Verdrehung unter dem durchgeleiteten Drehmoment zur Folge hat. Diese Schwächung wird auch in der DE-A- 3 236 800 auf Seite 5, Zeilen 16 bis 18 zugegeben.

Ziel der Erfindung ist es, eine Nockenwelle der eingangs erwähnten Art vorzuschlagen, die es ermöglicht, bei einer Ansteuerung von Pumpen bei gleichem Kopfdurchmesser der Nocken eine Erhöhung der erreichbaren Fördergeschwindigkeit und des Hubes zu erreichen, wobei aber die Festigkeit der Nockenwelle im wesentlichen erhalten bleiben soll.

Erfindungsgemäß wird dies dadurch erreicht, daß der Mittelpunkt des Kreisabschnittes, der den an den zweiten Nockenabschnitt anschließenden Übergangsbereich darstellt, auf der Verbindungsgeraden zwischen dem Grundkreismittelpunkt und der Anschlußstelle des zweiten Nockenabschnittes an den Übergangsbereich liegt, und daß der an den Übergangsbereich in Uhrzeigerrichtung anschließende Kurvenbereich des ersten Nockenabschnittes eine geradlinige oder gekrümmte Kontur aufweist, die den kleineren zum Grundkreis konzentrischen Kreis punktförmig berührt, wobei bei einem gekrümmten Konturverlauf der Radius der Kontur größer ist als der Radius des Nockengrundkreises und sich dieser Radius entlang des Konturverlaufes gegebenenfalls ändert, und der Krümmungsmittelpunkt des die punktförmige Berührung ergebenden Kreisabschnittes der Kontur auf der vom Grundkreismittelpunkt ausgehenden durch den Berührungspunkt gehenden Geraden außerhalb der von dem Grundkreis bedeckten Fläche liegt. Durch diese Maßnahmen wird eine Vergrößerung des Hubes und damit der Fördermenge, z.B. einer Dieseleinspritzpumpe, ohne eine Vergrößerung des Kopfkreisradius und ohne einer Verkleinerung des Grundkreisradius des Nockens möglich. Aufgrund des an den Nockengrundkreis anschließenden Konturbereichs mit kleinem Radius kommt es vorerst zu einer Absenkung des Rollenstößels welche bevorzugt ca. 5 bis 20 % des gesamten Hubes des Stößels betragen kann. Damit wird eine Vergrößerung des Gesamthubes des Stößels und damit der Fördermenge der daran angeschlossenen Pumpe erreicht, wobei nur eine sehr geringe Schwächung der Nockenwelle in Kauf genommen werden muß.

Der an den Übergangsbereich des ersten Nockenabschnittes in Uhrzeigerrichtung anschließende Bereich kann einen Konturverlauf mit einem sich ändernden Radius aufweisen. Dabei kann sowohl eine Krümmung vorgesehen sein, bei der der Mittelpunkt außerhalb der vom Nockengrundkreis umschlossenen Querschnittsfläche und auf der gleichen Profilseite wie das Rollenzentrum liegt, als auch mit unendlich großen Radius (gerade Nockenkontur) vorgesehen werden. Durch eine solche Ausbildung des an den Übergangsbereich des den Stößel auf seine höchste Erhebung bringenden Bereichs der Nockenkontur anschließenden Abschnittes kommt es zu einer Beschleunigungsumkehr und nach einem gewissen Drehwinkel der Nockenwelle auch zur Geschwindigkeits- und Bewegungsumkehr. Durch diesen Ausholeffekt kann eine wesentlich höhere Kolbengeschwindigkeit erzielt werden, ohne daß der Nockenwellenkörper nennenswert geschwächt wird. Durch die nur örtlich notwendige Ausarbeitung des Grundkreises entsteht keine wesentliche Verminderung der Nockenwellensteifigkeit.

Das relativ weiche Durchfahren des unteren Totpunktes der Kolbenbewegung gibt anderseits genügend Zeit für das Auffüllen des Pumpenraumes mit Kraftstoff über die Saugbohrung im Pumpenzylinder.

Die Erfindung wird nun anhand der Zeichnung näher erläutert. Dabei zeigen:

Figur 1    einen Nocken gemäß der Erfindung mit der Mittelpunktsbahn der darauf ablaufenden Rolle,

Figur 2    die Diagramme von Erhebung, bezogener Geschwindigkeit und bezogener Beschleunigung, aufgetragen über dem Nockenwinkel und

Figur 3    den Längsschnitt durch eine Einspritzpumpe, wobei sich der Rollenstößel gerade in der tiefsten Stellung befindet.

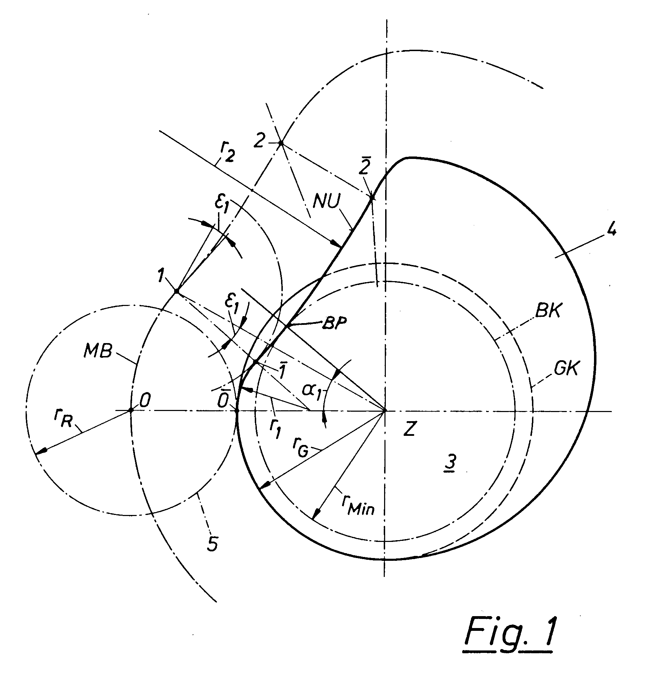

In Figur 1 ist der Nockenumriß NU eines Nockens 4 dargestellt, der zum Antrieb eines Rollenstößels und in weiterer Folge eines nicht dargestellten Pumpenkolbens einer Dieseleinspritzpumpe dient. Mit $r_R$ ist der Rollenradius der Stößelrolle 2 bezeichnet und MB stellt die Mittelpunktsbahn der um das Nockenprofil rotierenden Stößelrolle dar. Die Betrachtungsweise des stillstehenden Nockens und der mit der Nockenwellendrehzahl um diesen rotierenden Rolle hat sich als vorteilhaft erwiesen. Der Wert der Erhebung h bei einem Drehwinkel $\alpha$ ergibt sich dabei aus dem Mittelpunktsabstand von Rollen- und Nockenzentrum, vermindert um die Radien des Nockengrundkreises $r_G$ und der Rolle $r_R$:

$$h = H - r_G - r_R$$

Die Differentiation des Erhebungswertes h nach dem Nockendrehwinkel $\alpha$ liefert die bezogene Geschwindigkeit:

$$h' = \frac{dh}{d\alpha} = \frac{dh}{dt} \cdot \frac{dt}{d\alpha} = \frac{dh}{dt} \cdot \frac{1}{\omega}$$

Die zweimalige Differentiation der Erhebung nach dem Nockenwinkel liefert die bezogene Beschleunigung:

$$h'' = \frac{d^2h}{d\alpha^2} = \frac{d^2h}{dt^2} \cdot \left(\frac{dt}{d\alpha}\right)^2 = \frac{d^2h}{dt^2} \cdot \frac{1}{\omega^2}$$

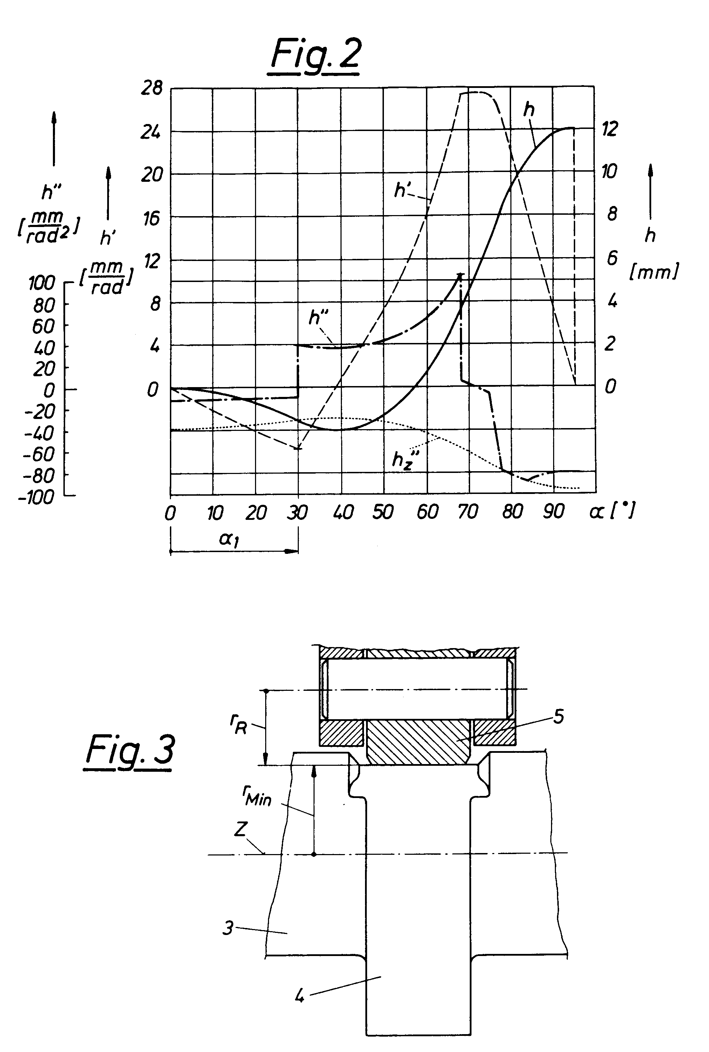

Aus Figur 1 ist ersichtlich, daß der an den Nockengrundkreis GK im Punkt $\overline{O}$ anschließende Bereich des Nockenumrisses einen kleineren Radius $r_1$, aufweist als der Nockengrundkreis. Dadurch wird der Richtungswinkel $\epsilon_1$ der Bahntangente an die Mittelpunktsbahn MB negativ und die Geschwindigkeit und Beschleunigung wirken im ersten Bereich in negativer Richtung, d.h. in Richtung einer weiteren Annäherung an die Drehachse Z der Nockenwelle 3. Wesentlich ist dabei, daß der Krümmungsradius in diesem ersten Bereich kleiner ist als der Radius des Nockengrundkreises und damit vorerst ein Absenken des Stößels und damit des Pumpenkolbens aus seiner ursprünglich tiefsten Stellung erfolgt. Dabei ist bei der Nockenauslegung darauf zu achten, daß die Beschleunigung im ersten Bereich in keinem Punkt betragsmäßig so groß wird, daß sie in Zusammenwirkung mit der aktuellen Kraft der Pumpenfeder ein Abheben der Rolle 5 vom Nocken 4 bei der höchsten Drehzahl der Nockenwelle 3 verursachen könnte, d.h., die Beschleunigung muß stets im Betrag kleiner sein als jene Beschleunigung $h_z''$ (Fig. 2), die die Stößelfeder der gemeinsamen Masse von Pumpenkolben, Rollenstößel und anteiliger Feder bei der jeweiligen Erhebung mitzuteilen vermag.

Anschließend an den ersten Bereich der Nockenkontur von Punkt 0 bis zum Punkt 1, bzw. von 0 bis 1 auf der Mittelpunktsbahn MB ist ein Bereich vorgesehen, der einen raschen Anstieg der Auslenkung und der Geschwindigkeit bezogen auf den Drehwinkel bewirkt, beispielsweise durch Anfügen einer Tangente oder eines Bogens mit großem negativem Radius. Bei der Ausführungsform nach der Fig. 1 ist ein Bogen mit großem negativem Radius $r_2$ angewendet, womit ein Hohlnokken entsteht. Der Bogen reicht auf dem Nocken 4 von Punkt 1 bis zum Punkt 2 und bwirkt im Anfang noch ein Absenken, dann aber ein rasches Anheben des Rollenstößels bzw. der Rolle 5. Fig. 2 zeigt, daß beim Winkel $\alpha_1$, bei welchem der Übergang von Krümmungsradius $r_1$, der positiv aber kleiner als der Radius $r_G$ des Nockengrundkreises ist zum Radius $r_2$ stattfindet, die bezogene Geschwindigkeit h' ihren niedrigsten Wert erreicht hat und dann wieder ansteigt. Dort, wo die Geschwindigkeit h' die Abszisse schneidet, ist der tiefste Punkt der Erhebungslinie h (Fig. 2) zu erkennen. Die Nockenform weist dort ihren zentrumsnächsten Punkt BP auf, der Berührkreis BK auf dem dieser Punkt BP liegt, weist den Radius $r_{min}$ auf. Die nun einsetzende Aufwärtsbewegung des Rollenstößels 5 kann nach den üblichen Gesetzmäßigkeiten erfolgen, beispielsweise durch Vorgabe bestimmter Profilgeometrien oder Bildungsgesetze für die Erhebungskurve.

Die dargestellte Vergrößerung des Gesamthubes ohne eine bedeutsame Schwächung des Nockenwellengrundkörpers ermöglicht eine gleichlaufende Erhöhung der Förderge schwindigkeit und der Förderrate, d.i. die pro Winkeleinheit geförderte Kraftstoffmenge. Damit kann bei unverändertem Bauraum einer Einspritzpumpe eine wesentlich höhere Einspritzmenge gefördert werden.

Figur 3 zeigt die Nocke 4 samt der Rolle 5 im Längsschnitt im Bereich der größten Annäherung der Rolle 5 an die Drehachse Z der Nockenwelle 3. Es ist zu ersehen, daß in diesem Bereich nur eine sehr geringe Schwächung des Querschnittes der Nockenwelle eintritt.

## Patentansprüche

1. Nockenwelle mit mindestens einer Nocke, zur Steuerung eines mit einer Rolle versehenen Stößels, einem von einem Nockengrundkreis (GK) ausgehenden, den Stößel in seine höchste Lage hebenden ersten Nockenabschnitt, dessen kleinster Abstand von der Achse der Nockenwelle kleiner ist als der Radius des Nockengrundkreises (GK), und einem in Uhrzeigerrichtung unmittelbar nach diesem ersten Nockenabschnitt angeordneten und am Nockengrundkreis (GK) endenden, den Stößel absenkenden zweiten Nockenabschnitt, wobei die Kontur der Nocke im ersten Nockenabschnitt aus einem in Uhrzeigerrichtung an den zweiten Nockenabschnitt anschließenden Übergangsbereich besteht, der gegenüber dem Radius des Nockengrundkreises (GK) einen kleineren Radius aufweist, und an diesen Übergangsbereich ein Bereich anschließt, mit einer Kontur, die einen zum Nockengrundkreis (GK) konzentrischen Kreis, dessen Radius kleiner ist als der Radius des Nockengrundkreises, berührt, wobei der Nockengrundkreis radius geringfügig größer oder gleich groß ist wie der Radius der Nockenwelle, dadurch gekennzeichnet, daß der Mittelpunkt des Kreisabschnittes, der den an den zweiten Nockenabschnitt anschließenden Übergangsbereich darstellt, auf der Verbindungsgeraden zwischen dem Grundkreismittelpunkt und der Anschlußstelle des zweiten Nockenabschnittes an den Übergangsbereich liegt, und daß der an den Übergangsbereich in Uhrzeigerrichtung anschließende Kurvenbereich des ersten Nockenabschnittes eine geradlinige oder gekrümmte Kontur aufweist, die den kleineren zum Grundkreis (GK) konzentrischen Kreis (BK) punktförmig berührt (BP), wobei bei einem gekrümmten Konturverlauf der Radius der Kontur größer ist als der Radius des Nockengrundkreises ($r_G$) und sich dieser Radius entlang des Konturverlaufes gegebenenfalls ändert, und der Krümmungsmittelpunkt des die punktförmige Berührung (BP) ergebenden Kreisabschnittes der Kontur auf der vom Grundkreismittelpunkt ausgehenden durch den Berührungspunkt gehenden Geraden außerhalb der von dem Grundkreis bedeckten Fläche liegt.

2. Nockenwelle nach Anspruch 1, **dadurch gekennzeichnet,** daß der Abstand ($r_{min}$) des zentrumsnächsten Punktes (BP) von der Achse (Z) der Nockenwelle um ca. 5 bis 20 % des gesamten Hubes des Stößels kleiner ist als der Radius ($r_G$) des Nockengrundkreises (GK).

**Claims**

1. Camshaft with at least one cam for controlling a follower provided with a roller, a first cam portion starting from a cam base circle (GK) which lifts the follower to its highest position, the smallest distance of the first portion from the axis of the camshaft being smaller than the radius of the base circle (GK), and a second cam portion arranged directly adjacent this first cam portion in a clockwise direction and ending on the base circle (GK) and lowering the follower, the contour of the cam in the first cam portion having a transition region following the second cam portion in a clockwise direction which has a smaller radius with respect to the radius of the base circle (GK), and joined to this transition region there is a region having a contour which touches a circle which is concentric with the base circle (GK) and of which the radius is smaller than the radius of the base circle, the radius of the base circle of the cam being minimally larger than or of the same size as the radius of the camshaft, characterised in that the centre of the arc which represents the transition region adjacent to the second cam portion lies on the straight line connecting the centre of the base circle and the meeting point of the second cam portion with the transition region and that the curved region of the first cam portion adjacent to the transition region in a clockwise direction has a rectilinear or curved profile which makes point contact (BP) with the circle (BK) which is smaller than the base circle (GK) and concentric, and with a curved profile shape the radius of the profile is greater than the radius (r) of the base circle of the cam and this radius changes possibly along the course of the contour, and the centre of curvature of the arcuate portion of the contour resulting in the point contact (BP) lies on the straight line starting from the centre of the base circle and passing through the point of contact outside the area embraced by the base circle.

2. Camshaft according to claim 1, characterised in that the distance ($r_{min}$) of the point (BP) nearest the axis from the axis (Z) of the camshaft is smaller by about 5 to 20% of the overall lift of the follower than the radius ($r_G$) of the base circle (GK) of the cam.

**Revendications**

1. Arbre à cames comportant au moins une came pour commander un poussoir muni d'un galet, et ayant un premier segment de came partant du cercle primitif (GK) de la came et soulevant le poussoir dans sa position la plus haute, segment dont la plus petite distance par rapport à l'axe de l'arbre à cames est inférieure au rayon du cercle primitif (GK), ainsi qu'un second segment de came suivant directement ce premier segment de came dans le sens des aiguilles d'une montre, et se terminant sur le cercle primitif (GK) de la came, pour abaisser le poussoir, le contour de la came dans le premier segment de came se composant d'une zone transitoire adjacente au second segment de came dans le sens des aiguilles d'une montre, zone transitoire dont le rayon est inférieur au rayon du cercle primitif (GK), cette zone transitoire étant suivie d'une zone ayant un contour touchant un cercle concentrique au cercle primitif (GK) mais dont le rayon est inférieur au rayon du cercle primitif, le rayon du cercle primitif étant légèrement supérieur ou égal au rayon de l'arbre à came, caractérisé en ce que le centre de l'arc de cercle qui constitue la zone transitoire adjacente au second segment de came se trouve sur la droite reliant le centre du cercle primitif et le point de raccordement du second segment de came à la zone transitoire, et en ce que la zone courbe adjacente à la zone transitoire dans le sens des aiguilles d'une montre et appartenant au premier segment de came présente un contour droit ou courbe qui touche ponctuellement (BP) le cercle (BK) concentrique au cercle primitif (GK) mais plus petit, et pour un tracé courbe du contour, le rayon du contour est supérieur au rayon ($r_G$) du cercle primitif et ce rayon varie le cas échéant suivant le contour et le centre de courbure de l'arc de cercle du contour qui résulte du contact ponctuel (BP) se trouve sur la droite partant du centre du cercle primitif et passant par le point de contact, à l'extérieur de la surface recouverte par le cercle primitif.

2. Arbre à cames selon la revendication 1, caractérisé en ce que la distance ($r_{min}$) du point (BP) plus proche du centre par rapport à l'axe (Z) de l'arbre à cames est inférieure environ de 5 à 20 % de la course totale du poussoir par rapport au rayon ($r_G$) du cercle primitif (GK) de la came.

5

_Fig. 1_

## Fig. 2

## Fig. 3

7